**Europäisches Patentamt**

**European Patent Office**

**Office européen des brevets**

(19)

(11) Veröffentlichungsnummer: **0 303 177 B1**

(12) **EUROPÄISCHE PATENTSCHRIFT**

(45) Veröffentlichungstag der Patentschrift:
12.06.91 Patentblatt 91/24

(51) Int. Cl.$^5$: **C08F 8/30**

(21) Anmeldenummer: **88112668.4**

(22) Anmeldetag: **04.08.88**

(54) **Polymerisate mit funktionellen Gruppen.**

(30) Priorität: **07.08.87 DE 3726285**

(43) Veröffentlichungstag der Anmeldung:
**15.02.89 Patentblatt 89/07**

(45) Bekanntmachung des Hinweises auf die
Patenterteilung:
**12.06.91 Patentblatt 91/24**

(84) Benannte Vertragsstaaten:
**BE DE FR GB IT NL**

(56) Entgegenhaltungen:
**EP-A- 0 211 395**

(56) Entgegenhaltungen:
**DE-A- 3 611 421**
**US-A- 3 177 190**
**US-A- 3 178 398**
**US-A- 3 976 628**

(73) Patentinhaber: **BASF Aktiengesellschaft**
**Carl-Bosch-Strasse 38**
**W-6700 Ludwigshafen (DE)**

(72) Erfinder: **Bronstert, Klaus, Dr.**
**Gartenstrasse 26**
**W-6719 Carlsberg (DE)**
Erfinder: **Wagner, Daniel, Dr.**
**Prof.-Dillinger-Weg 44**
**W-6702 Bad Duerkheim (DE)**

## Beschreibung

Die Erfindung betrifft funktionell modifizierte Homo-, Co- und/oder Blockcopolymerisate aus Vinylaromaten und/oder Dienen und deren Herstellung aus lebenden, anionisch polymerisierten oder aus mit Alkalimetall metallisierten Homo-, Co- und/oder Blockcopolymeren aus Vinylaromaten und/oder Dienen, die zunächst mit organischen Stickstoffverbindungen umgesetzt wurden unter Bildung einer N-Metallbindung.

Funktionell modifizierte Polymerisate aus Vinylaromaten und/oder Dienen und deren Herstellung aus den entsprechenden lebenden, anionisch polymerisierten oder aus den mit Alkalimetall metallisierten Polymerisaten sind bereits seit längerer Zeit bekannt. Danach gibt es eine Vielzahl elektrophiler Substanzen, die lebende Polymerketten nicht nur abbrechen, sondern eine funktionelle Gruppe in das Polymerisat einführen. So können z.B. Polymerisate mit Hydroxyl-, Carboxyl-, Thiol- oder Halogengruppen durch Umsatz lebender Polymerisate mit Verbindungen wie Epoxiden, Aldehyden, Ketonen, Kohlendioxid, Anhydriden, cyclischen Sulfiden, Disulfiden oder Halogen dargestellt werden.

Die Funktionalisierung mit Carboxylgruppen durch Umsetzen lebender Polymerisate mit Kohlendioxid ist ebenfalls eingehend beschrieben (vgl. die Publikation Advances in Polymer Science, Anionic Polymerization 56, 70-72, Springer-Verlag, Berlin-Heidelberg [1984]).

Nachteilig bei den bekannten Verfahren zur Einführung von Carboxylgruppen ist, daß die Umsetzung mit $CO_2$ in unpolaren Kohlenwasserstoffen stets zu Nebenreaktionen führt. Es handelt sich dabei im wesentlichen um Kopplungsreaktionen unter Bildung von Verbindungen mit höherer Molmasse (z.B. Ketone oder Carbinole).

Aus der DE-B 1 520 468 und der US-A 3 227 701 ist bekannt, diese Nebenreaktionen dadurch zu unterdrücken, daß man die Lösung lebender Polymerer kurzzeitig in möglichst intensivem Kontakt mit $CO_2$ bringt. Hierzu werden spezielle Mischbatterien oder rotierende Scheiben vorgeschlagen.

Eine Verbesserung der Reaktionsausbeute kann ebenfalls dadurch erreicht werden, daß man größere Mengen an polaren Lösungsmittelkomponenten wie z.B. Tetrahydrofuran mitverwendet. Die Verwendung von polaren Lösungsmittelbestandteilen übt jedoch, wie dem Fachmann bekannt ist, einen nachteiligen Effekt auf die Mikrostruktur anionisch polymerisierter Diene wie z.B. Butadien aus.

Eine vollständige Unterdrückung der unerwünschten Nebenreaktionen und eine quantitative Funktionalisierung mit Carboxylgruppen ist bislang nicht erzielt worden.

Aufgabe der vorliegenden Erfindung war es daher, in einer eindeutigen und mit hohem Umsatz verlaufenden Reaktion Polymerisate aus Vinylaromaten und/oder Dienen mit mindestens einer Carboxyl- oder Estergruppe und/oder Endgruppe zu schaffen. Es bestand weiterhin die Aufgabe, die Umsetzung gegebenenfalls in unpolaren Lösungsmitteln, insbesondere in einem aliphatischen, cycloaliphatischen und/oder aromatischen Kohlenwasserstoff und unter Verwendung von stöchiometrischem oder geringfügigem Überschuß eines leicht zugänglichen Carboxylierungsreagenz, durchzuführen. Es bestand ferner die Aufgabe Polymerisate mit Carboxylgruppen auf einfachem Wege zu erhalten.

Diese Aufgaben wurden durch Polymerisate nach Ansprüchen 1 bis 2 und ein Verfahren zur Herstellung der Polymerisate nach Anspruch 3 gelöst.

In den Polymerisaten mit den funktionellen Gruppen der allgemeinen Formel (I) bedeutet

Y bevorzugt eine verzweigte oder unverzweigte Kohlenwasserstoffkette mit 1 bis 20 C-Atomen, die zudem aromatische Glieder enthalten kann.

$R^1$ bevorzugt Wasserstoff, verzweigte oder unverzweigte Alkylreste mit 1 bis 7 C-Atomen,

R einen beliebigen organischen Rest wie z.B. Methyl-, n-Butyl-, tert.-Butyl-, Phenyl-, Benzyl-, Cyclohexyl-, 6-Dimethylaminohexyl-, 4-Dimethylaminophenyl-.

n ist eine ganze Zahl größer oder gleich 1, bevorzugt 1 bis 3.

In den europäischen Patentanmeldungen 86110539 und 87103893 sowie in der deutschen Patentanmeldung 3 642 467 ist die Herstellung von Polymerisaten mit Aminogruppen vorgeschlagen worden, die durch Umsetzung Lithiummetall enthaltender Polymerisate mit speziellen Stickstoffverbindungen erhalten werden. Dabei handelt es sich um bestimmte Hydrazinderivate, sowie Verbindungen, die über mindestens eine

$$\text{>C=N-Gruppe}$$

verfügen. Als solche seien hier beispielhaft Schiff'sche Basen, Carbodiimide oder Azine genannt.

Bei diesen Umsetzungen entstehen Polymerisate, die über eine oder mehrere N-Lithium-Gruppen verfügen, und die nach Hydrolyse oder Alkoholyse in Polymerisate mit Aminogruppen überführt werden können.

Überraschend wurde nun gefunden, daß die N-Lithium-Gruppen enthaltenden Polymerisate auch zu Umsetzungen geeignet sind, die es gestatten, Carboxylgruppen einzuführen.

Nach erfindungsgemäßen Verfahren werden dazu Polymerisate, die über eine Stickstoff-Lithiummetallbindung verfügen mit Verbindungen der allgemeinen Formel

EP 0 303 177 B1

$$X\text{-}Y\text{-}[COOR^1]_n \quad (III)$$

umgesetzt.

Bei den Verbindungen handelt es sich um Halogensäureester, bei denen das Halogenatom nicht direkt am Carbonylkohlenstoff sitzt. In Formel III bedeuten X ein Halogenatom (Chlor, Brom oder Jod), wobei Chlor bevorzugt wird ; Y stellt im einfachsten Fall eine unverzweigte Kohlenwasserstoffkette dar $[Y = H - (CH_2)_m]$, wobei m eine ganze Zahl gleich oder größer 1 ist. Das Halogenatom X kann entlang dieser Kette an beliebiger Stelle anstatt eines Wasserstoffatoms stehen. Bevorzugt werden jedoch $\omega$-Halogencarbonsäureester eingesetzt.

Y kann darüber hinaus auch aromatische, cycloaliphatische, sowie weitere N- oder O-Glieder enthalten, mit der Einschränkung, daß das Halogenatom nicht direkt an ein aromatisches Kohlenstoffatom gebunden ist.

Das Symbol Y in Formel III steht in gleicher Weise für eine gegebenenfalls weiter substituierte Brücke, die mehr als eine Carboxylestergruppe aufweist.

Die hier näher bezeichneten Halogencarbonsäuren werden als Ester primärer, sekundärer oder tertiärer Alkohole eingesetzt, wobei die sekundären und tertiären Ester bevorzugt werden. Diese Alkohole können aliphatische, cycloaliphatische oder aromatische Glieder enthalten.

Geeignete Verbindungen nach Formel III sind z.B. : 2-Chloressigsäure-tert.-butylester, 3-Chlorpropionsäureisobutylester, 11-Bromundecansäureethylester, 4-Chlormethylbenzoesäureisobutylester, Brombernsteinsäurediisobutylester.

Erfindungsgemäß sind unter Homo-, Co- und Blockcopolymerisaten aus Vinylaromaten und/oder Dienen die bekannten Polymerisate dieser Art zu verstehen, die anionisch z.B. mit Hilfe von alkalimetallorganischen Initiatoren aus den entsprechenden Monomeren erhalten werden können. Derartige Verfahren sind hinlänglich bekannt, so daß sie hier nicht weiter erörtert werden müssen (vgl. z.B. GB-Patent 1 444 680 oder J.Appl.Polym. Sci. 22, (1978), Seiten 2007 bis 2013).

Als Vinylaromaten kommen insbesondere Styrol, die verschiedenen Alkylstyrole oder Vinylnaphthalin, als Diene Butadien, Isopren, 2,3-Dimethylbutadien, Piperylen, Phenylbutadien oder andere anionisch polymerisierbare konjugierte $C_4$- bis $C_{12}$-Diene in Betracht. Außer den jeweiligen Homopolymerisaten kommen auch die Copolymerisate und die bekannten Blockcopolymerisate von Vinylaromaten und Dienen in Frage, wobei je nach Wahl des Initiators und Verfahrensweise Blockcopolymerisate oder Copolymerisate mit statistischer Verteilung der Monomeren erhalten werden können.

Das Ausgangsmaterial für die erfindungsgemäßen Polymerisate mit den funktionellen Gruppen der allgemeinen Formel (I) wird entweder aus den lebenden anionisch polymerisierten oder aus mit Alkalimetall metallierten Homo-, Co- und/oder Blockcopolymerisaten aus Vinylaromaten und/oder Dienen nach bekannten Verfahren hergestellt.

Dazu werden die Monomeren in Gegenwart von Alkalimetallen oder deren Alkyl- oder Arylderivaten, insbesondere in Gegenwart der Alkylderivate des Lithiums wie sec.-Butyllithium in einem inerten Lösungsmittel wie aliphatischen, cycloaliphatischen oder aromatischen Kohlenwasserstoffen, insbesondere Hexan, Cyclohexan, Benzol oder Toluol bzw. in Gegenwart von Tetrahydrofuran anionisch polymerisiert.

Bei diesen Verfahren erhält man Polymerisate, welche an den Endgruppen Metall gebunden enthalten. Man kann aber auch Homo-, Co- und/oder Blockpolymerisate aus Vinylaromaten und/oder Dienen herstellen und nachträglich mit Alkalimetallen oder deren Derivaten metallieren. Derartige metallierte Polymerisate enthalten die metallorganischen Gruppierungen statistisch längs der Kette verteilt.

Verfahren zur Metallierung ungesättigter Polymerisate und Umsetzen des erhaltenen metallierten Polymeren mit reaktionsfähigen chemischen Verbindungen sind auch in den US-Patenten 3 781 260 und 3 976 628 beschrieben.

Anschließend werden die obigen metallorganischen Polymerisate mit Stickstoffverbindungen wie in den europäischen Patentanmeldungen 86110539 und 87103893 und der deutschen Patentanmeldung 36 42 467 beschrieben umgesetzt, wobei die Polymerisate (II) mit N-Alkalimetallbindungen entstehen, wobei das Alkalimetall bevorzugt Lithium ist.

Erfindungsgemäß werden in einem zweiten Schritt diese Polymerisate (II) mit Halogensäureestern der allgemeinen Formel (III) in Gegenwart eines Lösungsmittels umgesetzt. Als Lösungsmittel bevorzugt geeignet sind aliphatische, cycloaliphatische oder aromatische Kohlenwasserstoffe wie Hexan, Cyclohexan, Benzol, Toluol usw. Geeignet sind ferner Ether wie Tetrahydrofuran, Diethylether und andere, wie sie üblicherweise bei der anionischen Polymerisation als Lösungsmittel benutzt werden. Vorteilhaft wird die Umsetzung in den gleichen Lösungsmitteln durchgeführt wie die Polymerisation der Monomeren bzw. die Umsetzung mit den Stickstoffverbindungen.

Die Umsetzung der N-Lithium enthaltenden Polymerisate mit Halogensäureestern verläuft mit großer Geschwindigkeit und mit hoher Ausbeute. Es ist ein Vorteil, daß man bei ihrer Anwendung häufig keinen oder nur wenig Überschuß benötigt, so daß die umgesetzten Polymeren kaum durch nicht umgesetzte Halogenverbindungen verunreinigt sind.

Die erfindungsgemäßen Polymerisate mit Säureestergruppen können leicht durch Hydrolyse ggf. unter Säurekatalyse und Abspaltung der Esterfunktion in Polymerisate mit Carbonsäuregruppen umgewandelt werden, welche wiederum zu weiteren Umsetzungen herangezogen werden können.

Die erfindungsgemäßen Polymerisate können ferner durch Hydrierung in Polymerisate überführt werden, in denen die aliphatischen ungesättigten Bindungen teilweise oder vollständig abgesättigt sind.

Die Hydrierung wird vorzugsweise mit molekularem Wasserstoff und Katalysatoren auf Basis von Metallen oder Metallsalzen der 8. Gruppe des Periodensystems durchgeführt. Sie kann in heterogener Phase, z.B. mit Raney-Nickel oder in homogener Phase mit Katalysatoren auf Basis von Salzen, insbesondere den Carboxylaten, Alkoxyden oder Enolaten des Kobalts, Nickels oder Eisens, die mit Metallalkylen, insbesondere Aluminiumalkylen kombiniert sind, erfolgen.

Die folgenden Beispiele dienen der Erläuterung der Erfindung :

Charakterisierung der Polymerisate :

Die mittleren Molekulargewichte (Zahlenmittel $\overline{M}_n$) wurden durch Gelpermeationschromatographie (GPC) anhand von Eichkurven für Polystyrol bzw. Polybutadien (Eichsubstanzen Mw/Mn = ca. 1) bei 23°C in 0,125 gew.%iger Tetrahydrofuranlösung bei einer Durchflußgeschwindigkeit von 1,5 ml/min ermittelt [vgl. G. Glöckner, "Polymercharakterisierung durch Flüssigkeitschromatographie", Verlag A. Hüthig, Heidelberg, 1982].

Basenstickstoff bestimmt durch potentiometrische Titration mit Perchlorsäure in einer Mischung von Chlorbenzol/Eisessig. Gesamtstickstoff bestimmt nach Kjeldahl.

Säurezahlbestimmung : titrimetrisch mit 0,1 n KOH in einer Mischung von Toluol/Methanol gegen Phenolphthalein.

Beispiel 1

In einem unter Reinstickstoff mit einer Lösung von n-Butyllithium in Cyclohexan gespülten, thermostatisierbaren 2-Liter-Reaktionsgefäß, der mit Rührer und Thermometer versehen ist, und mit einer Siliconmembran gasdicht verschlossen ist, werden 500 ml Cyclohexan und 100 g Styrol gegeben. Bei 40°C wird mit einer Injektionsspritze unter gutem Rühren so lange eine 1,4 molare Lösung von sek.-Butyllithium in Cyclohexan zu der Styrollösung gegeben, bis eine bleibende schwache Gelbfärbung entsteht. Daraufhin werden weitere 10 mMol sek.-Butyllithium zugegeben. Die jetzt intensiv orange gefärbte Lösung erwärmt sich. Nach 1 Stunde ist die Polymerisation beendet. Mittels einer Injektionsspritze wird die Lösung mit Benzylidenmethylamin austitriert. Nach Zugabe von 1,2 g Aminierungsreagenz (0,01 Mol) ist die orange Farbe verschwunden. Man hält die Lösung für weitere 15 min bei 40°C. Dem Reaktionsgefäß wird eine geringe Probemenge zu analytischen Zwecken entnommen, gefällt, isoliert und getrocknet (Polymer A1). Danach wird 1,55 g Chloressigsäure-tert.-butylester in das Reaktionsgefäß eingespritzt.

Nach weiteren 15 min wird das Polymerisat unter intensivem Rühren durch Eingießen der Lösung in 5 l Ethanol gefällt, abfiltriert und bei 50°C im Vakuum getrocknet (Polymer B1).

30 g des Polymerisats B1 wurden in 300 ml Toluol gelöst, 1,5 g p-Toluolsulfonsäure versetzt und 8 h bei 80°C gerührt. Anschließend wurde das Polymerisat erneut in Ethanol gefällt, mehrmals mit Ethanol-Wasser Mischungen gewaschen, isoliert und wie beschrieben getrocknet (Polymer C1).

Die Polymerisate werden nachstehend charakterisiert :

```
Molekulargewicht [Mn]        : 10.000 (Polymer A1)
Basenstickstoff  [Gew.%]     :  0,14  (Polymer A1)
Gesamtstickstoff [Gew.%]     :  0,14  (Polymer A1)
Säurezahl        [mg KOH/g]:   5,5   (Polymer C1)
```

Beispiel 2

In gleicher Weise wie in Beispiel 1 wird ein lebendes Poly(styryl)lithium aus 80 g monomerem Styrol und 28,5 mmol sek-Butyllithium in 500 ml Cyclohexan hergestellt, jedoch erfolgte der Abbruch mit 1,5-Diaza-bicyclo-[3,1,0]hexan. Nach Zugabe von 2,4 g Aminierungsreagenz ist der Reaktionsansatz entfärbt.

Nach Entnahme einer geringen Probemenge (Polymer A2) werden 4,3 g Chloressigsäure-tert.-butylester in das Reaktionsgefäß eingespritzt.

Das Polymerisat wird analog Beispiel 1 gefällt und isoliert (Polymer B2). Eine Teilmenge von B2 wie beschrieben zur Abspaltung der Esterfunktion sauer hydrolysiert (Polymer C₂). Die Polymerisate weisen folgende analytische Daten auf :

```
Molekulargewicht [Mn]       : 2.800 (Polymer A2)
Basenstickstoff [Gew.%]     : 0,95 (Polymer B2)
Gesamtstickstoff [Gew.%]    : 0,97 (Polymer B2)
Säurezahl       [mg KOH/g]: 18    (Polymer C2)
```

## Beispiel 3

Zur Herstellung eines 2-Blockcopolymerisats aus 20 Gew.% Styrol und 80 Gew.% Butadien wird ein mit Rührer, Thermometer, Rückflußkühler, Siliconmembran und Heizmantel versehener 6 l-Reaktor mit Cyclohexan, das 5 cm³ sek-Butyllithium enthält, unter Reinstickstoff zur Reinigung ausgekocht. Nach Ablassen dieser Lösung wird der Reaktor mit 3000 cm³ Cyclohexan und 100 g Styrol beschickt. Nach Austitrieren der noch vorhandenen protonenaktiven Verunreinigungen, wie in Beispiel 1 beschrieben, werden 25 mmol sek-Butyllithium zugegeben, und man läßt das Styrol bei 65°C 1 Stunde lang auspolymerisieren. Sodann wird 400 g 1,3-Butadien, das durch Abdestillieren von Butyllithium gereinigt wurde, nach und nach bei dieser Temperatur eingespeist. Zwei Stunden nach beendigtem Zulauf wird dem Reaktionsgefäß eine Probe entnommen. Das Blockcopolymerisat wird in Ethanol gefällt, isoliert und getrocknet. Es weist ein Molekulargewicht (Mn) von 19.000 auf.

Zu der verbliebenen lebenden Polymerlösung werden 3,2 g N,N'-Diisopropylcarbodiimid mittels einer Injektionsspritze zugesetzt. Nach weiteren 15 Min wird noch 5,7 g 4-Chlormethylbenzoesäureisobutylester in das Reaktionsgefäß eingespritzt. Die Lösung wird für weitere 30 Min gerührt. Anschließend wird das Polymerisat in Ethanol gefällt, mit einem handelsüblichen Stabilisator (z.B. ®Kerobit TBK) versetzt und bei 50°C im Vakuum getrocknet.

10 g des Blockcopolymerisats werden in 100 ml Toluol gelöst und 12 h bei 65°C mit 0,5 g p-Toluolsulfonsäure gerührt. Das Polymerisat wird erneut in Ethanol gefällt, mehrmals mit Ethanol/Wasser Mischungen gewaschen und bei 50°C im Hochvakuum getrocknet.

An dem Polymerisat wird ein Stickstoffgehalt von 0,14 Gew.% gefunden (Bestimmung nach Kjeldahl). Die Säurezahl beträgt 2,7 [mg KOH/g Polymer].

## Beispiel 4

Zur Herstellung eines hydrierten Random-Mischpolymerisats mit Carboxylendgruppen wird ein mit Rührer, Thermometer, Heizmantel und entsprechenden Zuläufen ausgestatteter 10 l-Reaktor unter Reinstickstoff entsprechend Beispiel 3 zur Reinigung ausgekocht. Der Reaktor wird sodann mit 5140 cm³ Cyclohexan, 50 cm³ Tetrahydrofuran, 500 g Styrol und 500 g gereinigtem 1,3-Butadien beschickt. Nach dem Austitrieren der Verunreinigungen werden bei 40°C 58,8 mmol sek-Butyllithium zugegeben. Die Polymerisation wird unter Mantelkühlung 2 h bei 65°C durchgeführt. Dem Reaktor wird eine Probe entnommen. Das statistisch aufgebaute Styrol-Butadiencopolymer weist ein mittleres Molekulargewicht (Mn) von 17.000 auf.

Der lebenden Polymerlösung werden 11,7 g (= 65 mmol) Benzylidenanilin und nach weiteren 15 min 9,7 g (= 65 mmol) Chloressigsäure-tert.-butylester zugesetzt.

Nach 15 min wird eine Probe gezogen, gefällt, isoliert und getrocknet. An der Probe wird ein Stickstoffgehalt von 0,082 Gew.% (Kjeldahl-Stickstoff) gemessen.

Dem verbliebenen Reaktionsansatz wird eine Hydrierkatalysatorlösung aus 1,3 g Nickel(II)acetylacetonat, gelöst in 40 ml Toluol und mit 30 ml einer Lösung von Triisobutylaluminium (20 gew.%ig in Hexan) versetzt, zugeführt. Der Reaktor wird mit 15 bar Wasserstoff beaufschlagt und bei einer Temperatur von 56°C läßt man 8 h hydrieren. Der Gehalt an olefinisch ungesättigten Bindungen ist danach auf 3% der ursprünglich vorhandenen Ungesättigtkeit gesunken.

(Bestimmung durch fouriertransformierte Infrarotspektroskopie)

Das selektiv hydrierte Random-Mischpolymerisat wird gefällt, isoliert und wie in den vorhergehenden Beispielen in Lösung mit p-Toluolsulfonsäure behandelt.

An einer sorgfältig gereinigten Probe des isolierten Materials wird eine Säurezahl von 3,1 [mg KOH/g Polymer] gemessen.

## Ansprüche

1. Funktionell modifizierte Homo-, Co- und/oder Blockcopolymerisate aus Vinylaromaten und/oder Dienen, dadurch gekennzeichnet, daß sie funktionelle Gruppen der allgemeinen Formel (I) enthalten :

$$\diagdown \!\!\!\!\!\diagup N-Y-[COOR^1]_n \qquad (I)$$

in der N = Stickstoff, O = Sauerstoff, Y = eine gegebenenfalls substituierte Brücke, die außer Kohlenstoff zusätzlich N- oder O-Glieder enthalten kann, R = ein beliebiger organischer Rest, $R^1$ = ein Wasserstoff-, Alkyl-, Cycloalkyl- oder Arylrest und n = eine ganze Zahl größer oder gleich 1 ist.

2. Polymerisate nach Anspruch 1, dadurch gekennzeichnet, daß sie pro Makromolekül im Mittel 1 bis 10 der funktionellen Gruppen (I) enthalten.

3. Verfahren zur Herstellung von Polymerisaten der allgemeinen Formel (I) aus lebenden anionisch polymerisierten oder aus mit Alkalimetall metallierten Homo-, Co-und/oder Blockcopolymerisaten aus Vinylaromaten und/oder Dienen, die mit organischen Stickstoffverbindungen umgesetzt über eine Stickstoff-Alkalimetallbindung verfügen, dadurch gekennzeichnet, daß Polymerisate der allgemeinen Formel (II) in Gegenwart eines gegebenenfalls unpolaren Lösungsmittels umgesetzt werden mit Verbindungen der allgemeinen Formel (III), wobei Me = Alkalimetall, X = Halogen und Y, O, N, R, n und $R^1$ (außer Wasserstoff) die oben angegebenen Bedeutungen haben

$$\diagdown \!\!\!\!\!\diagup N-Me \qquad + \qquad X-Y-[COOR^1]_n$$

$$(II) \qquad\qquad\qquad (III)$$

## Claims

1. A functionally modified homopolymer, random copolymer or block copolymer of an aromatic vinyl or a diene, which contains functional groups of the formula (I) :

$$\diagdown \!\!\!\!\!\diagup N-Y-[COOR^1]_n \qquad (I)$$

where N is nitrogen, O is oxygen, Y is a substituted or unsubstituted bridge which besides carbon additionally may contain N- or O-members, R is any desired organic radical, $R^1$ is hydrogen, alkyl, cycloalkyl or aryl, and n is a whole number greater than or equal to 1.

2. A polymer as claimed in claim 1, which contains per macromolecule on average from 1 to 10 functional groups (I).

3. A process for preparing a polymer of the formula (I) from a living anionically polymerized or alkali metallized homopolymer, random copolymer or block copolymer of an aromatic vinyl or a diene which, reacted with an organic nitrogen compound, has a nitrogen-alkali metal bond, which comprises reacting a polymer of the formula (II) in the presence of a polar or apolar solvent with a compound of the formula (III) where Me is an alkali metal, X is halogen and Y, O, N, R, n and $R^1$ (other than hydrogen) have the abovementioned meanings

EP 0 303 177 B1

$$\sum_{R}^{\diagdown} N{-}Me \cdot \qquad + \qquad X{-}Y{-}[COOR^1]_n$$

(II) (III)

## Revendications

1. Homopolymères, copolymères et/ou copolymères à blocs, en composés vinylaromatiques et/ou diènes, fonctionnellement modifiés caractérisés en ce qu'ils contiennent des radicaux fonctionnels de la formule générale (I) :

$$\sum_{R}^{\diagdown} N{-}Y{-}[COOR^1]_n \qquad (I)$$

dans laquelle N représente un atome d'azote, O représente un atome d'oxygène, Y représente des ponts, éventuellement substitués, qui, outre du carbone, peuvent contenir complémentairement des éléments N ou O, R représente un radical organique au choix, $R^1$ représente un atome d'hydrogène, un radical alkyle, cycloalkyle ou aryle et n représente un nombre entier supérieur ou égal à 1.

2. Polymères suivant la revendication 1, caractérisés en ce qu'ils contiennent, en moyenne, de 1 à 10 des radicaux fonctionnels (I) par macromolécule.

3. Procédé de préparation de polymères de la formule générale (I) à partir d'homopolymères, de copolymères et/ou de copolymères à blocs en composés vinylaromatiques et/ou diènes, vivants, anioniquement polymérisés ou métallisés par un métal alcalin, qui, ayant réagi sur des composés azotés organiques, disposent d'une liaison azote-métal alcalin, caractérisé en ce que l'on fait réagir des polymères de la formule générale (II), en présence d'un solvant éventuellement apolaire, avec des composés de la formule générale (III) où Me représente un métal alcalin, X représente un atome d'halogène et Y, O, N, R, n et $R^1$ possèdent, outre l'hydrogène, les significations qui leur ont été précédemment attribuées

$$\sum_{R}^{\diagdown} N{-}Me \cdot \qquad + \qquad X{-}Y{-}[COOR^1]_n$$

(II) (III)

7